Europäisches Patentamt

European Patent Office

Office européen des brevets

(11) Veröffentlichungsnummer: **0 421 061 A1**

## (12) EUROPÄISCHE PATENTANMELDUNG

(21) Anmeldenummer: **90112913.0**

(22) Anmeldetag: **06.07.90**

(51) Int. Cl.5: **B64C 27/41**

(30) Priorität: **05.10.89 DE 3933243**

(43) Veröffentlichungstag der Anmeldung:
**10.04.91 Patentblatt 91/15**

(84) Benannte Vertragsstaaten:
**DE FR GB IT**

(71) Anmelder: **Messerschmitt-Bölkow-Blohm Gesellschaft mit beschränkter Haftung Robert-Koch-Strasse W-8012 Ottobrunn(DE)**

(72) Erfinder: **Braun, Dieter, Dr. Setzbergstrasse 1 W-8156 Otterfing(DE)**

(54) **Rotor mit einem schlaggelenkigen Blattanschluss im Rotorzentrum.**

(57) Bei einem Rotor, insbesondere eines Drehflügelflugzeugs, mit einem gemeinsamen schlaggelenkigen Blattanschluß (2) sämtlicher Rotorblätter (1) im Rotorzentrum und mit einem Rotorantrieb über einen Faltenbalg (6) zwischen einer Antriebswelle (3) und einer die Rotorblätter (1) vereinigenden Rotornabe (4) wird diese von einer über den schlaggelenkigen Blattanschluß (2) in koaxialer Anordnung auf der Antriebswelle (3) abgestützten Säule (5) getragen , wobei eine über die Säule (5) oder unmittelbar mit der Rotornabe (4) hergestellte starre Verbindung (5.1) des Faltenbalges (6) in Längsrichtung der Säule (5) bzw. Antriebswelle (3) gegenüber dem schlaggelenkigen Blattanschluß (2) wenigstens annähernd den gleichen Abstand wie die starre Verbindung (3.1) des Faltenbalges (6) mit der Antriebswelle (3) aufweist.

EP 0 421 061 A1

## ROTOR MIT EINEM SCHLAGGELENKIGEN BLATTANSCHLUSS IM ROTORZENTRUM

Die Erfindung betrifft einen Rotor gemäß dem Oberbegriff des Patentanspruchs 1.

Bei einem derartigen sog. halbstarren Rotor beispielsweise gemäß der US-PS 47 08 591 erfolgt zur Entlastung des Blattanschlußgelenkes von den Antriebsmomenten der Rotorantrieb mittels der Antriebswelle über zwei flexible Faltenbälge in symmetrischer Anordnung (oberhalb bzw. unterhalb) zu einer um das Blattanschlußgelenk positionierten ringscheibenförmigen Rotornabe, welche über den einzelnen Faltenbalg mit je einer Mitnehmerscheibe der Antriebswelle gekuppelt ist. Mit einer solchen durch die Rotornabe unterteilten Faltenbalganordnung läßt sich zwar eine gleichförmige Drehmitnahme des Rotors, d.h. Gleichlauf desselben mit der Antriebswelle erreichen, jedoch kommt es wegen dieser Unterteilung bei der Neigung der Rotornabe um das Blattanschlußgelenk im Rotorumlauf zu einer (umlaufenden) S-förmigen Verformung der Faltenbalganordnung längs der Balgachse. Damit sind die Faltenbälge einer unerwünscht hohen Beanspruchung ausgesetzt.

Der Erfindung liegt daher die Aufgabe zugrunde, bei einem Rotor der eingangs genannten Art die S-förmige Balgverformung auszuschließen.

Diese Aufgabe ist für einen gattungsgemäßen Rotor mit den kennzeichnenden Merkmalen des Patentanspruchs 1 gelöst. Hiernach ist die Rotornabe für die Kupplung mit dem Faltenbalg in einer gegenüber dem schlaggelenkigen Blattanschluß beabstandeten Position angeordnet, so daß der faltenbalg sich ohne Unterteilung in der Blattschlagebene zur Kupplung der Antriebswelle mit der Rotornabe zwischen den betreffenden Verbindungen erstrecken kann, und zwar mit jeweils gleicher Erstreckungslänge von der Blattschlagebene zu diesen beiden Verbindungen. Damit ist sichergestellt, daß infolge einer Neigung der Rotornabe der Faltenbalg der Länge nach bloß einfach gebogen wird. Für die Gestaltung des schlaggelenkigen Blattanschlusses und Positionierung der Rotorblätter bedeutet dies keinerlei Beschränkung. So ist die Anordnung eines zentralen Blattschlaggelenkes in der Rotordrehebene mit der im Anspruch 2 gekennzeichneten Form der Rotornabe ohne Probleme.

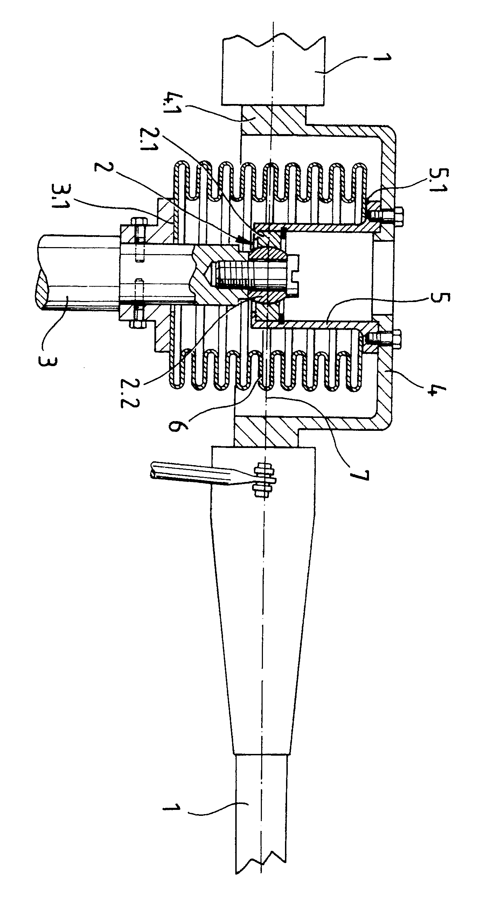

Im folgenden wird die Erfindung anhand eines Ausführungsbeispieles weiter erläutert. Dabei zeigt die Zeichnung in der Seitenansicht teils geschnitten das Zentrum eines Drehflügelflugzeug-Rotors der sog. halbstarren Bauweise mit einem schlaggelenkigen Blattanschluß sämtlicher Rotorblätter 1 im Rotorzentrum mittels eines allseitig winkelbeweglichen Gelenklagers 2, welches auf einer Rotor-Antriebswelle 3 festsitzend angeordnet ist. Andererseits ist dieses (Schlag-)Gelenklager 2 die Basis einer die Rotorblätter 1 vereinigenden biegesteifen Rotornabe 4, welche hierbei von einer über das Gelenklager 2 in koaxialer Anordnung auf der Antriebswelle 3 abgestützten Säule 5 getragen wird. Durch diese Säule 5 wird erreicht, daß ein mehrwelliger Faltenbalg 6 zum Drehen (Antrieb) der Rotornabe 4 mittels der Antriebswelle 3 sich vom Gelenklager 2 aus in Längsrichtung der Antriebswelle 3 bzw. Säule 5 bis zu den diesbezüglichen Verbindungen 3.1 bzw. 5.1 jeweils mit der gleichen Länge erstrecken kann. Diese beiden starren Verbindungen 3.1 und 5.1 , z.B. Klebverbindungen, weisen demnach gegenüber dem Gelenklager 2 jeweils den gleichen Abstand auf, so daß beim Umlauf der Rotorblätter 1 unter der Blattschlagbewegung mit entsprechender Neigung der Rotornabe 4 der die Drehmomentübertragung sicherstellende Faltenbalg 6 bloß eine einfache Biegeverformung über die Balglängsachse (sog. Umlaufbiegung) erfährt. Hierzu kann erforderlichenfalls der Faltenbalg 6 auch unmittelbar an der Basis der Rotornabe 4 befestigt sein.

Außerdem hat die Rotornabe 4 die Form eines dem Faltenbalg 6 berührungsfrei übergestülpten Topfes mit einem dessen Mantel angeformten Flansch 4.1 für einen unmittelbaren Anschluß des einzelnen Rotorblattes 1, wodurch die Lage der Rotordrehebene 7 in Bezug auf das Gelenklager 2 mit der Wahl der Höhe des Topfmantels bestimmbar ist. Am Flansch 4.1 kann das einzelne Rotorblatt 1 z.B. mittels eines ein Axial-Radiallager tragenden Zapfens drehwinkelbeweglich angeschlossen sein; ebenso ist auch ein starrer Blattanschluß mittels Bolzen möglich, sofern das Rotorblatt 1 einen torsionsweichen Blatthals aufweist. Es versteht sich, daß das Gelenklager 2 auf die dargestellte Ausführungsform mit einem Lagerring 2.1 um ein Kugelstück 2.2 nicht beschränkt ist und stattdessen auch als sphärisches Elastomerlager ausgebildet sein kann. Schließlich kann der Faltenbalg 6 in bekannter Ausführung je nach geforderter Steifigkeit aus Metall oder auch faserverstärktem Kunststoff bestehen.

## Ansprüche

1. Rotor, insbesondere eines Drehflügelflugzeugs, mit einem gemeinsamen schlaggelenkigen Blattanschluß sämtlicher Rotorblätter im Rotorzentrum und mit einem Rotorantrieb über einen Faltenbalg zwischen einer Antriebswelle und einer die Rotorblätter vereinigenden Rotornabe, **dadurch gekennzeichnet,** daß die Rotornabe (4) von einer über den schlaggelenkigen Blattanschluß (2) in koaxialer Anordnung auf der Antriebswelle (3) abgestützten Säule (5) getragen wird, wobei eine über die Säule (5) oder unmittelbar mit der Rotornabe (4) hergestellte starre Verbindung (5.1) des Faltenbalges (6) in Längsrichtung der Säule (5) bzw. Antriebswelle (3) gegenüber dem schlaggelenkigen Blattanschluß (2) wenigstens annähernd den gleichen Abstand wie die starre Verbindung (3.1) des Faltenbalges (6) mit der Antriebswelle (3) aufweist.

2. Rotor nach Anspruch 1, **dadurch gekennzeichnet,** daß die Rotornabe (4) die Form eines dem Faltenbalg (6) berührungsfrei übergestülpten Topfes mit einem dessen Mantel angeformten Flansch (4.1) für einen Anschluß des einzelnen Rotorblattes (1) aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | US-A-4 877 375 (DESJARDINS) <br> * Spalte 6, Zeile 1 - Spalte 6, Zeile 36; Figur 3 * <br> – – – | 1,2 | B 64 C 27/41 |
| X | DE-B-1 102 563 (WILFORD,LEMONT) <br> * Spalte 3, Zeile 10 - Spalte 3, Zeile 25 * * Spalte 5, Zeile 27 - Spalte 5, Zeile 35; Figur 3 * <br> – – – | 1 | |
| A | US-A-3 080 002 (DU PONT) <br> * Spalte 1, Zeile 64 - Spalte 1, Zeile 70; Figur 1 * <br> – – – – | 2 | |

| | |
|---|---|
| | **RECHERCHIERTE SACHGEBIETE (Int. Cl.5)** |
| | B 64 C |

Der vorliegende Recherchenbericht wurde für alle Patentansprüche erstellt

| Recherchenort | Abschlußdatum der Recherche | Prüfer |
|---|---|---|
| Den Haag | 10 Januar 91 | ZERI A. |